# EUROPEAN PATENT SPECIFICATION

(11) **EP 2 140 748 B1**
(45) Date of publication and mention of the grant of the patent: **18.01.2012**
(21) Application number: 09007823.9
(22) Date of filing: 15.06.2009
(51) Int. Cl.: A01B 59/06

(54) **Tractor hitches**
Kupplungen für einen Traktor
Crochets de tracteur

(30) Priority: 01.07.2008 GB 0811912
(43) Date of publication of application: 06.01.2010
(73) Proprietor: AGCO GmbH, 87616 Marktoberdorf (DE)
(72) Inventor: Dietrich, Ulrich, Oberdiessen 86944 (DE)
(74) Representative: Morrall, Roger

(56) References cited:
- EP-A- 1 103 171
- WO-A-2004/077928
- WO-A-2006/080038

## Description

This invention relates to tractor hitches and particularly, though not exclusively, to such hitches for use on the front of small tractors.

There is a requirement to provide a hitch which is more compact and which enables an implement to be mounted on the front of the tractor at a closer position to the tractor than when using a normal three point hitch so that the application point of the weight of the implement is closer to the centre of gravity of the tractor which leads to a more balance weight distribution. Also reducing the overall length of the tractor gives better manoeuvrability as it is less likely to restrict steering.

EP 1103171 discloses a tractor coupling for coupling an agricultural implement to a tractor. The coupling comprises a first coupling part which is mounted on a three point linkage of the tractor. A second coupling part is provided for attachment to the first part. The second coupling part may be provided with one or more lower brackets for attachment to an implement

It is also known to provide a tractor with a pivoting arm mounted on the front of the tractor carrying an implement mounting plate at its outer end on which implements can be directly bolted and to provide a lift means (such as a pair of lift cylinders) for pivoting the hitch arm to raise and lower the mounting plate. Whilst such a mounting plate arrangement provides a means of mounting an implement on a tractor which can position the implement significantly closer to the tractor it causes problems when it is desired to connect an implement to the tractor using lower links as it is necessary to remove the pivoting arm from the chassis and connect a pair of lower links to the chassis. This is a time consuming operation requiring the use of tools.

It is an object of the present invention to provide a tractor hitch which at least mitigates the above problem.

Thus according to the present invention there is provided a tractor hitch in accordance with claim 1.

Such a hitch enables the lower link unit to be easily detached from or attached to the mounting plate leaving the pivoting hitch arm and lift means permanently in place on the tractor.

Such a hitch arrangement enables the tractor operator to easily convert between attaching implements directly via the mounting plate or via lower links without the need to detach the mounting plate and pivoting hitch arm.

The lower link unit may be detached from the mounting plate when it is desired to mount an implement on the mounting plate.

The lower link unit may be pivoted relative to the mounting plate to parking position which is intermediate the operative and non-operative positions.

The lower link unit is preferably pivoted on the mounting plate adjacent an upper edge of the mounting plate.

A locking means is provided for locking the lower link unit in its operative position relative to the mounting plate.

A support member may be provided for holding the lower link unit in its parking position relative to the mounting plate.

The support member may also be arranged to hold the lower link unit in its non-operative position relative to the mounting plate.

In one arrangement in order to pivot the lower link unit to its non-operative position the pivot axis of the lower link unit relative to the mounting plate must be changed.

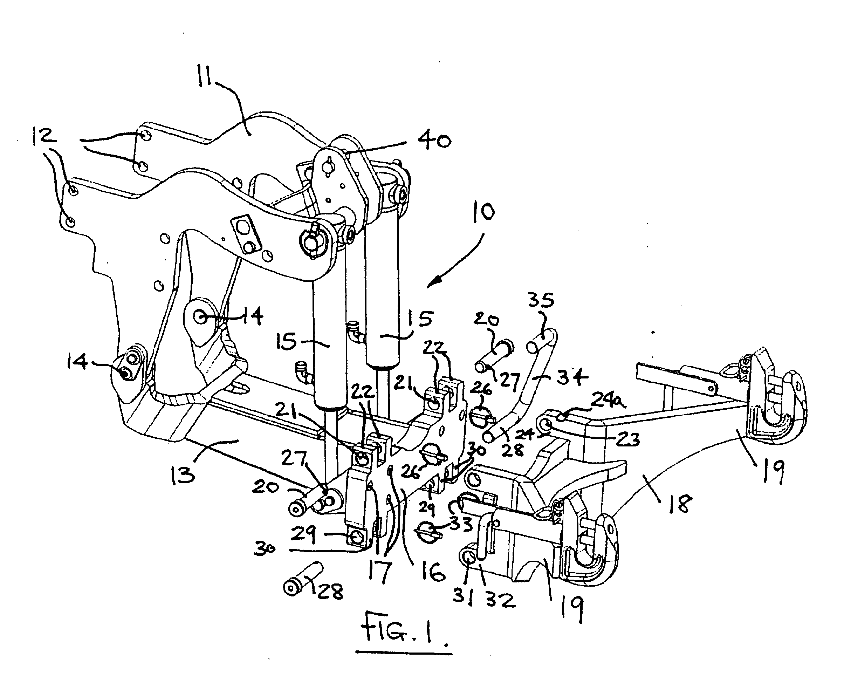

One embodiment of the present invention will now be described by way of example only, with reference to the accompanying drawing in which:-
- Figure 1: shows a perspective view of a tractor hitch in accordance with the invention in a partially exploded condition;
- Figure 2: shows a perspective view of the hitch of Figure 1 assembled in an operative position in which implements can be attached via a lower link unit;
- Figure 3: shows a side view in the direction of the arrow X of Figure 2;
- Figure 4: shows a perspective view of the hitch in a parking position;
- Figure 5: shows a side view in the direction of the arrow Y of Figure 4 ;
- Figure 6: shows a side view of the hitch in a first non-operative position in which implements can be attached directly via the attachment plate, and
- Figure 7: shows a side view of an alternative non-operative position in which the pivot axis of the lower link unit has been changed.

Referring to the drawings, a tractor hitch 10 has a main frame 11 which is bolted to the front of a tractor chassis (not shown) using bolt holes 12. An implement mounting arm 13 is pivotally mounted at 14 on frame 11 and can be raised and lowered relative to frame 11 by lift cylinders 15. Mounted on the outer end of arm 13 is an implement mounting plate 16 which includes bolt holes 17 via which implements can he mounted directly on plate 16.

As an alternative, implements can be mounted via lower link unit 18 which includes a pair of lower links 19 and which can be mounted on plate 16 either using bolt holes 17 or preferably using an upper pair of mounting pins 20 which extend through bores 21 in mounting ears 22 and which also engage bores 23 in mounting flanges 24 formed on the lower link unit 18. As will be appreciated, the upper mounting pins 20 are held in position in ears 22 and flanges 24 by lynch pins 26 which pass through holes 27 in pins 20.

The lower link unit 18 is also secured to mounting plate 16 by lower mounting pins 28 which again extend through bores 29 in ears 30 on plate 16 and through bores 31 in flanges 32 on the lower mounting plate. Lynch pins 33 hold the mounting pins 28 in position.

The lower left hand mounting pin 28 is provided with an extension 34 which is generally hooked shaped and terminates in an end portion 35 which is generally parallel to the mounting pin portion 28. This extension 34 is used as a support member for the lower link unit 18 as will be described below.

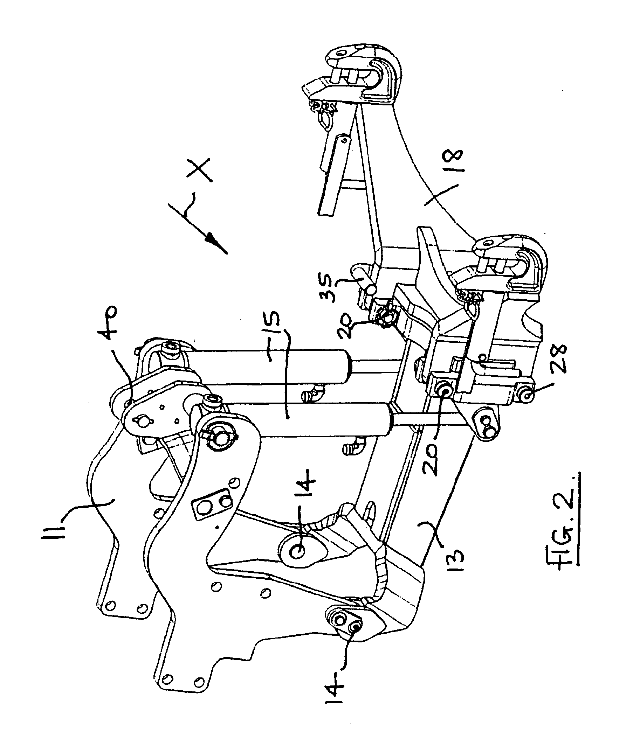

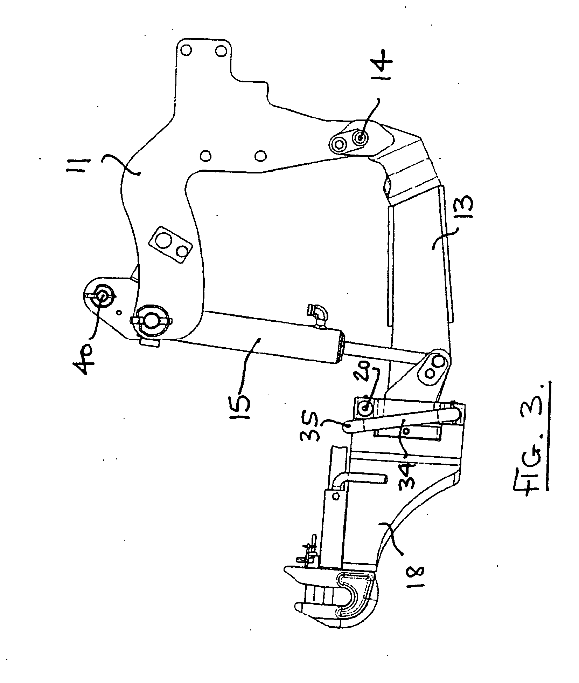

Figure 2 shows the hitch with the lower link mounting unit 18 secured to the mounting plate 16 using the mounting pins 20 and 28 and with the end portion 35 of the mounting pin extension 34 hooked over the upper surface of the lower link unit. This is also clearly shown in Figure 3. To ensure that the pin 28 is not pivoting unintentionally, the lower link unit 18 is provided with milled recess 24a which receives the end portion 35 of pin 28.

With the lower link unit 18 secured in position an implement can be mounted on the hitch using the lower links 19 and upper link (not shown) which can be mounted on pin 40 provided on the upper part of frame 11.

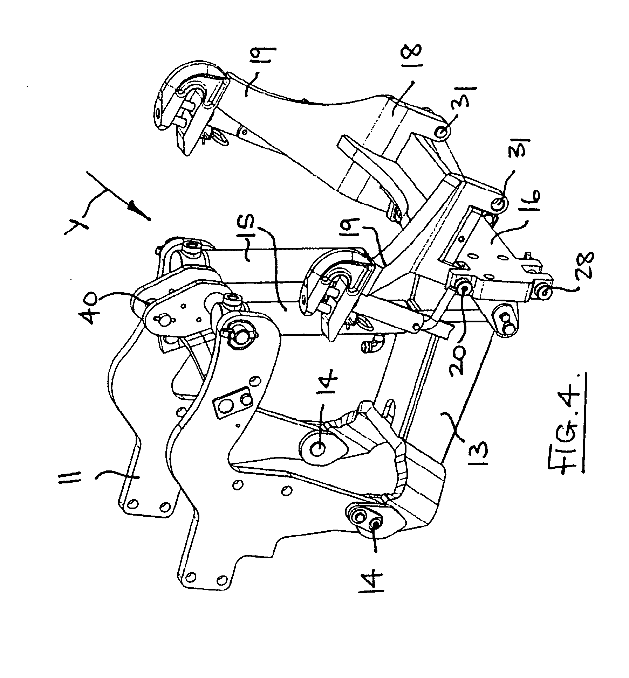

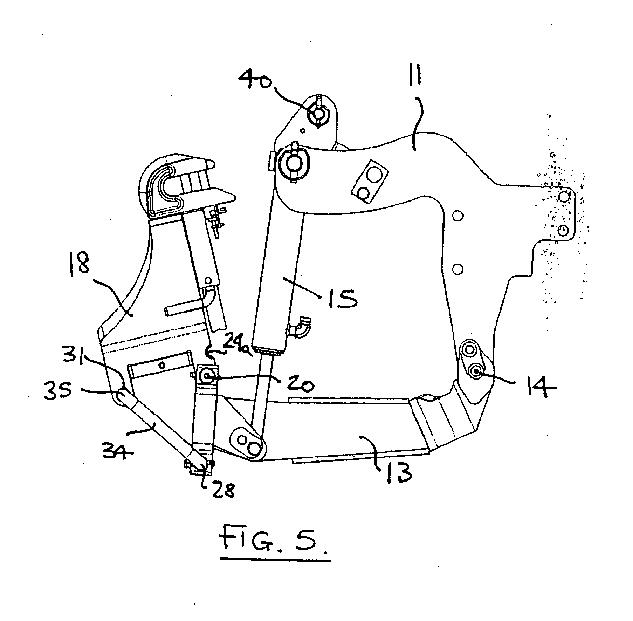

If it is desired to reduce the effective length of the hitch whilst the tractor is being parked or when it is being manoeuvred the lower link unit 18 can be pivoted to the parking position shown in Figures 4 and 5 by disconnecting the lower mounting pins 28 from the lower flanges 32 provided on the lower link unit so that the lower link unit can pivot relative to the mounting plate 16 about the upper mounting pins 20. As can be clearly seen from Figure 5, the support member provided by the extension 34 and end portion 35 can be used to hold the lower link unit in the parking position by engaging the end portion 35 of the extension 34 in the bore 31 provided in the lower right hand flanges 32 on the lower link member.

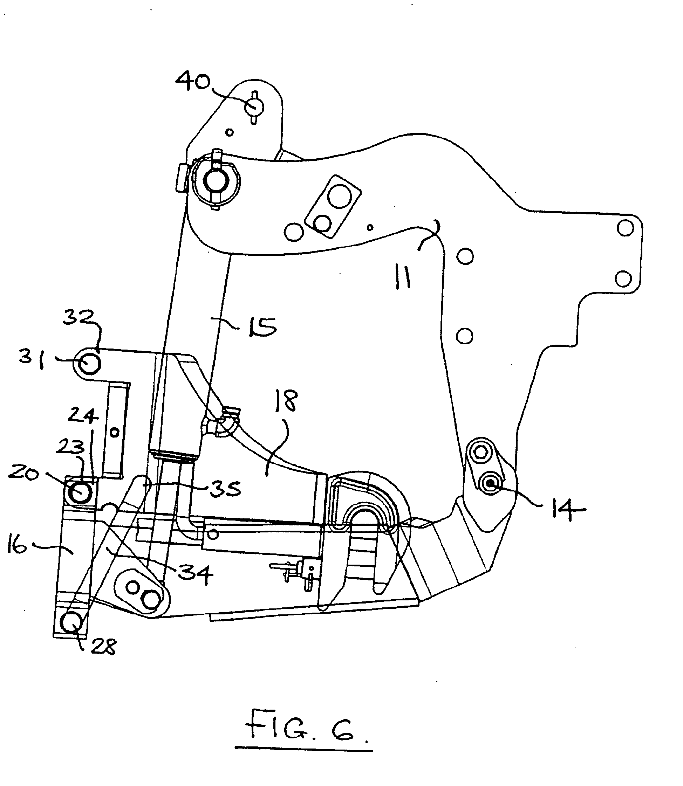

The lower link unit 18 can be pivoted further to a so-called non-operative position shown in Figure 6 in which the implement mounting plate 16 is clear for the attachment of implements to the mounting plate using the bolt holes 17. This fully stored non-operative position is particularly convenient if the frame geometry can be designed to allow the lower link unit to pivot to this Position.

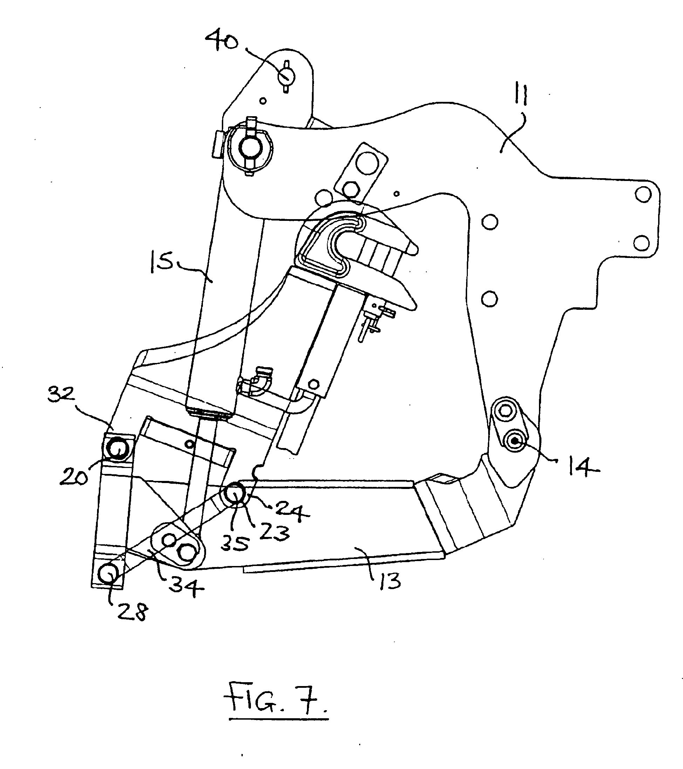

Figure 7 shows an alternative non-operative position in which the pivot axis of the lower link unit 18 on the implement mounting plate 16 is changed by mounting the lower mounting flanges 32 on the upper part of the mounting plate using the pins 20 and engaging the end portion 35 of the support provided by the extension 34 in the bores 23 of the upper mounting flanges 24 of the lower link unit.

The tractor hitch of the present invention thus provides an arrangement in which, if it is desired to mount an implement on the tractor using the mounting plate 16 the lower link unit 18 maybe completely detached from the mounting plate thus allowing the implement to be mounted on the mounting plate using the bolt holes 17. Alternatively, as described above, the lower link unit 18 can be pivoted to a non-operative position for example shown in Figure 6 or Figure 7, in which the mounting plate 16 is still fully accessible and an implement can be bolted to the plate 16 using the bolt holes 17.

Thus the tractor operator can use the tractor hitch to mount an implement on the front of the tractor using a conventional three point mounting or can easily convert the hitch to mounting an implement on the tractor using the mounting plate 16 which will significantly move the mounted implement towards the tractor so that the application point of the weight of the implement will be closer to the centre of gravity of the tractor thus leading to a more balanced weight distribution. The hitch described above could also be used to mount an implement on the rear of a tractor if desired.

The hitch also provides the convenience of a parking position as shown in Figures 4 and 5 which does not require the lower link unit to be removed from the mounting plate 16 and both lower links 19 can be raised as a single unit.

## Claims

1. A tractor hitch (10) comprising a pivoting hitch arm (13) having an implement mounting plate (16) at its outer end for mounting implements thereto, lift means (15) for pivoting the hitch arm (13) to raise and lower the mounting plate (16), and a lower link unit (18) for providing an alternative mount for implements **characterised in that** said lower link unit (18) is pivotally mounted on the mounting plate (16) so that when it is desired to mount an implement on the mounting plate (16) the lower link unit (18) can be moved to a non-operative position in which the mounting plate (16) is clear for the attachment of implements.

2. A hitch (10) according to claim 1 wherein the lower link unit (18) is detachably mounted to the mounting plate (16).

3. A hitch (10) according to claim lor claim 2 in which the lower link unit (18) can be pivoted relative to the mounting plate (16) to a parking position which is intermediate an operative and non-operative position.

4. A hitch (10) according to any preceding claim in which the lower link unit (18) comprises a pair of lower links (19) connected to form a single unit.

5. A hitch (10) according to any preceding claim in which the lower link unit (18) is pivoted on the mounting plate (16) adjacent an upper edge of the mounting plate (16).

6. A hitch (10) according to any preceding claim in which locking means (20, 28) are provided for locking the lower link unit (18) in its operative position relative to the mounting plate (16).

7. A hitch (10) according to any of claims 2 to 6 in which a support member (34,35) is provided for holding the lower link unit (18) in its parking position relative to the mounting plate (16).

8. A hitch (10) according to claim 7 in which the support member (34, 35) can also hold the lower link unit (18) in its non-operative position relative to the mounting plate (16).

9. A hitch (10) according to claim 8 in which in order to pivot the lower link unit (18) to its non-operative storage position the pivot axis of the towel link unit (18) relative to the mounting plate (16) must be changed.

## Patentansprüche

1. Anbaueinrichtung (10) für ein Zugfahrzeug oder einen Traktor mit einem verschwenkenden Anbaueinrichtungs-Arm (13), der an seinem äußeren Ende eine Montageplatte (16) zum Montieren von Arbeitsgeräten daran besitzt, mit mindestens einem Hebemittel (15) zum Verschwenken des Anbaueinrichtungs-Arms (13) zum Heben und Senken der Montageplatte (16) und mit einer unteren Verbindungseinheit (18) zur Gewährleistung einer alternativen Montage für Arbeitsgeräte, **dadurch gekennzeichnet, dass** die untere Verbindungseinheit (18) verschwenkbar an oder mit der Befestigungsplatte (16) montiert ist, so dass, wenn es gewünscht ist, ein Arbeitsgerät an der Befestigungsplatte (16) zu montieren, die untere Verbindungseinheit (18) in eine nicht betriebswirksame Position bewegt werden kann, in der die Befestigungsplatte (16) frei ist für die Befestigung von Arbeitsgeräten.

2. Anbaueinrichtung (10) nach Anspruch 1, **dadurch gekennzeichnet, dass** die untere Verbindungseinheit (18) lösbar an oder mit der Befestigungsplatte (16) montiert ist.

3. Anbaueinrichtung (10) nach Anspruch 1 oder 2, **dadurch gekennzeichnet, dass** die untere Verbindungseinheit (18) relativ zu der Befestigungsplatte (16) verschwenkt werden kann in eine Park-Position, die zwischen einer betriebswirksamen und einer nicht-betriebswirksamen Position angeordnet ist.

4. Anbaueinrichtung (10) nach einem der vorhergehenden Ansprüche, **dadurch gekennzeichnet, dass** die untere Verbindungseinheit (18) ein Paar unterer Verbindungselemente (19) aufweist mit Verbindung derselben zur Bildung einer einzigen Einheit.

5. Anbaueinrichtung (10) nach einem der vorhergehenden Ansprüche, **dadurch gekennzeichnet, dass** die untere Verbindungseinheit (18) benachbart einem oberen Rand der Befestigungsplatte (16) auf oder gegenüber der Befestigungsplatte (16) verschwenkt wird.

6. Anbaueinrichtung (10) nach einem der vorhergehenden Ansprüche, **dadurch gekennzeichnet, dass** Sperr- oder Verriegelungsmittel (20, 28) vorgesehen sind zum Sperren oder Verriegeln der unteren Verbindungseinheit (18) in der betriebswirksamen Position relativ zu der Befestigungsplatte (16).

7. Anbaueinrichtung (10) nach einem der Ansprüche 2 bis 6, **dadurch gekennzeichnet, dass** zum Halten der unteren Verbindungseinheit (18) in der Park-Position relativ zu der Befestigungsplatte (16) ein Tragelement (34, 35) vorgesehen ist.

8. Anbaueinrichtung (10) nach Anspruch 7, **dadurch gekennzeichnet, dass** das Tragelement (34, 35) die untere Verbindungseinheit (18) auch in der nicht betriebswirksamen Position relativ zu der Befestigungsplatte (16) halten kann.

9. Anbaueinrichtung (10) nach Anspruch 8, **dadurch gekennzeichnet, dass** zum Verschwenken der unteren Verbindungseinheit (18) in die nicht betriebswirksame SpeicherPosition die Schwenkachse der unteren Verbindungseinheit (18) relativ zu der Befestigungsplatte (16) verändert werden muss.

## Revendications

1. Crochet d'attelage de tracteur (10) comprenant un bras de crochet pivotant (13) comportant une plaque de montage d'accessoire (16) au niveau de son extrémité externe afin d'assurer le montage d'accessoires sur celui-ci, des moyens de levage (15) destinés à faire pivoter le bras de crochet (13) de manière à soulever et abaisser la plaque de montage (16), et une unité de liaison inférieure (18) destinée à permettre une variante de montage d'accessoires, **caractérisé en ce que** ladite unité de liaison inférieure (18) est montée de manière à pouvoir pivoter sur la plaque de montage (16) de telle sorte que lorsque l'on désire monter un accessoire sur la plaque de montage (16) l'unité de liaison inférieure (18) peut être déplacée vers une position non opérationnelle dans laquelle la plaque de montage (16) est dégagée afin d'assurer la fixation d'accessoires.

2. Crochet d'attelage (10) selon la revendication 1, dans lequel l'unité de liaison inférieure (18) est montée de manière amovible sur la plaque de montage (16).

3. Crochet d'attelage (10) selon la revendication 1 ou 2, dans lequel l'unité de liaison inférieure (18) peut pivoter par rapport à la plaque de montage (16) vers une position de garage qui est intermédiaire entre une position opérationnelle et non opérationnelle.

4. Crochet d'attelage (10) selon l'une quelconque des revendications précédentes, dans lequel l'unité de liaison inférieure (18) comprend une paire de biellettes inférieures (19) couplées afin de former une seule unité.

5. Crochet d'attelage (10) selon l'une quelconque des revendications précédentes, dans lequel l'unité de liaison inférieure (18) est amenée à pivoter sur la plaque de montage (16) de manière adjacente à un bord supérieur de la plaque de montage (16).

6. Crochet d'attelage (10) selon l'une quelconque des revendications précédentes, dans lequel des moyens de verrouillage (20, 28) sont agencés afin de verrouiller l'unité de liaison inférieure (18) dans sa position opérationnelle par rapport à la plaque de montage (16).

7. Crochet d'attelage (10) selon l'une quelconque des revendications 2 à 6, dans lequel un élément de support (34, 35) est agencé afin de maintenir l'unité de liaison inférieure (18) dans sa position de garage par rapport à la plaque de montage (16).

8. Crochet d'attelage (10) selon la revendication 7, dans lequel l'élément de support (34, 35) peut aussi maintenir l'unité de liaison inférieure (18) dans sa position non opérationnelle par rapport à la plaque de montage (16).

9. Crochet d'attelage (10) selon la revendication 8, dans lequel, dans le but de faire pivoter l'unité de liaison inférieure (18) vers sa position de stockage non opérationnelle, l'axe de pivot de l'unité de liaison inférieure (18) par rapport à la plaque de montage (16) doit être changé.
